# EUROPEAN PATENT SPECIFICATION

(11) **EP 3 172 458 B1**
(45) Date of publication and mention of the grant of the patent: **30.12.2020**
(21) Application number: 15824807.0
(22) Date of filing: 27.07.2015
(51) Int. Cl.: F16F 9/34, F16F 9/32, F16F 9/18, F16F 9/348

(54) **SHOCK ABSORBER**
STOSSDÄMPFER
AMORTISSEUR

(30) Priority: 25.07.2014 US 201462029020 P
(43) Date of publication of application: 31.05.2017
(73) Proprietor: Hitachi Automotive Systems Americas Inc., Harrodsburg, KY 40330 (US)
(72) Inventor: ROMANO, Michael, Farmington Hills, MI 48335 (US); ASSADI, Jahan, Ann Arbor, MI 48103 (US); AVIREDDI, Prashanth, Farmington Hill, MI 48335 (US); SEERA, Nikhil, Farmington Hills, MI 48335 (US)
(74) Representative: MERH-IP Matias Erny Reichl Hoffmann Patentanwälte PartG mbB
(86) International application number: PCT/US2015/042237
(87) International publication number: WO 2016/015047

(56) References cited:
- EP-A2- 1 113 186
- EP-A2- 1 148 268
- GB-A- 2 266 133
- JP-A- S6 440 731
- US-A- 4 064 977
- US-A- 5 150 775
- US-A1- 2013 020 159
- US-A1- 2013 192 457
- US-A1- 2013 192 457
- US-B1- 6 230 858

## Description

### CROSS-REFERENCE TO RELATED APPLICATIONS

This application claims priority of U.S. Provisional Application 62/029,020 filed July 25, 2014.

### BACKGROUND OF THE INVENTION

### I. FIELD OF THE INVENTION

The present invention relates to shock absorbers.

### II. DESCRIPTION OF RELATED ART

Most light vehicles, such as automobiles, utilize shock absorbers to improve the ride for the occupants. The shock absorbers ideally maintain the chassis of the vehicle in a level or near level position despite variations in the height of the road surface.

Shock absorbers are vital for absorbing energy transmitted to the vehicle chassis due to unevenness of the road surface. Since many road surfaces are uneven, the performance of the shock absorber is important to reducing the energy transfer from the road to the vehicles and the vehicle chassis, as well as improving the comfort of the ride for the occupants.

Most shock absorbers include an outer tube, an inner tube coaxially mounted within the outer tube, and a piston that is reciprocally mounted within the interior of the inner tube. A base valve assembly is attached at the end of the inner and outer tubes and regulates the fluid flow between an outer annular replenishment chamber formed between the inner tube and the outer tube, and a main working chamber within the interior of the inner tube. The piston which is reciprocally mounted within the inner tube is immersed within a hydraulic fluid. In addition, the inner tube of a shock absorber is oftentimes known as the pressure tube while the outer tube is known as the reserve tube. The reserve tube stores the excess hydraulic fluid in the shock absorber in the annular outer or replenishment chamber.

Conventionally, the piston for the shock absorber is attached to the chassis of the motor vehicle. The inner tube, in turn, is attached to the wheel structure of the suspension system so that the inner tube moves in unison with the vertical movement of the wheel. Consequently, as the wheel encounters either bumps or depressions in the road surface, the piston reciprocates within the inner surface in an attempt to maintain the piston, and thus the chassis, at an even vertical position.

In order to dampen the impact of jolts or bumps from the road surface, a base valve assembly regulates the fluid flow between the working chamber and the replenishment chamber. Additionally, orifices through the piston permit fluid flow through the piston in order to dampen the effects of an uneven road surface.

Shock absorbers work in two distinct cycles, namely the compression cycle and the extension cycle. The compression cycle, also known as the bound cycle, occurs as the piston moves downwardly into the shock absorber thus compressing the hydraulic fluid in the shock absorber working chamber below the piston. Conversely, the extension cycle, also known as the rebound cycle, occurs as the piston moves outwardly towards the top of the pressure tube thus extending the overall length of the shock absorber. This, in turn, compresses the fluid in the working chamber above the piston.

One disadvantage of the previously known shock absorbers of the type used in the automotive industry is that these previously known shock absorbers exhibit hysteresis, which is the lag existing in the replenishment of the working chamber of the shock absorber during the rebound stroke. A lag or incomplete replenishment during the rebound stroke will reduce the amount of oil flowing from the outer or replenishment reservoir and to the inner or working chamber. The incomplete replenishment of the working chamber of the shock absorber with oil will adversely affect the dampening characteristics of the shock absorber during the bound stroke.

Consequently, most modern shock absorbers do not exhibit the perfect or ideal response from an uneven road surface, but rather variations in the dampening curves during the rebound cycle as a result of hysteresis. Furthermore, the hysteresis of the shock absorber is largely dependent upon the geometric design of the base valve assembly of the shock absorber which regulates fluid flow between the replenishment and the working chamber.

US 2013/0192457 A1 a cylinder apparatus is suggested that has an annular valve member provided with at least a part of flow paths and having a through bore, a pin member inserted through the through bore of the valve member and an annular disk valve.

US 2013/0192457 A1 discloses the preamble of claim 1.

In US 2013/0020159 A1 a shock absorber includes a valve assembly which includes a valve disk engaging an inner and outer valve land defined by a valve body.

In US 6,230858 B1 a valve assembly for a fluid vehicle damper is described. The valve body has an outer surface adjacent to an interior wall of the cylinder and including a first and second opposing surface. The valve body defines first and second fluid chambers within the damper.

### SUMMARY OF THE PRESENT INVENTION

The present invention provides a base valve assembly for a shock absorber which improves the flow characteristics between the replenishment chamber and the working chamber, especially during the extension stroke, and thus reduces hysteresis of the shock absorber.

In brief, the base valve assembly in accordance with the present invention includes a generally cylindrical base plate which is attached to the inner and outer tubes which form the replenishment and working chamber for the shock absorber. As before, a piston is reciprocally mounted within the working chamber of the inner tube.

A base cage is then positioned over the base plate. The base cage includes a first set of fluid passageways which fluidly connect the inner working chamber to the outer replenishment chamber during the compression stroke of the piston. This first set of fluid passageways is generally circular in cross-sectional shape.

A second set of fluid passageways also fluidly connect the outer replenishment chamber to the inner working chamber, but do so upon the extension stroke of the piston. This second set of fluid passageways are formed by arcuate, elongated slots formed through the base cage around the first set of slots so that the ends of the slots are positioned closely adjacent each other. By doing so, maximum flow can occur through the second set of fluid passageways during the extension cycle.

A first flap valve is associated with the first set of fluid passageways to limit the fluid flow through the first set of fluid passageways only during the compression cycle. Conversely, a second flap valve is associated with the second set of fluid passageways to limit fluid flow from the replenishment chamber into the working chamber during an extension stroke.

In order to further improve the oil flow through the base valve assembly, the radially inner walls of the second set of passageways, i.e. the elongated slots, extend outwardly from an outer end of the base cage. Furthermore, the outer radial side of the slots either extends radially outwardly from the slot or slopes slightly inwardly relative to the axial length of the shock absorber. Consequently, the fluid flow of oil from the replenishment chamber and to the working chamber during an extension stroke flows freely underneath the base cage and against the inner wall of the slots. The inner wall of the slots then directs the fluid flow upwardly through the slots and into the working chamber.

In order to further reduce the flow resistance of the hydraulic oil from the replenishment chamber, through the slots, and into the working chamber, a frustoconical reflector surface is formed on the base plate in alignment with the slots forming the second set of fluid passageway. Consequently, during an extension cycle, the fluid flow from the replenishment chamber is deflected upwardly through the slots by the reflector surface thus minimizing flow resistance.

By minimizing the flow resistance of the oil through the base valve assembly, especially during an extension cycle, the shock absorber hysteresis is substantially reduced thereby improving the overall performance of the shock absorber.

### BRIEF DESCRIPTION OF THE DRAWING

A better understanding of the present invention will be had upon reference to the following detailed description when read in conjunction with the accompanying drawing, wherein like reference characters refer to like parts throughout the several views, and in which:
FIG. 1 is a longitudinal sectional view illustrating a shock absorber utilizing the base valve assembly of the present invention;
FIG. 2 is a side view illustrating a preferred embodiment of the base valve assembly;
FIG. 3 is a longitudinal sectional view of the base valve assembly;
FIG. 4 is a top elevational view illustrating the base cage assembly;
FIG. 5 is a diagrammatic longitudinal sectional view illustrating the oil flow during a compression cycle; and
FIG. 6 is a view similar to FIG. 5, but illustrating the oil flow during an extension cycle of the shock absorber.

### DETAILED DESCRIPTION OF A PREFERRED

### EMBODIMENT OF THE PRESENT INVENTION

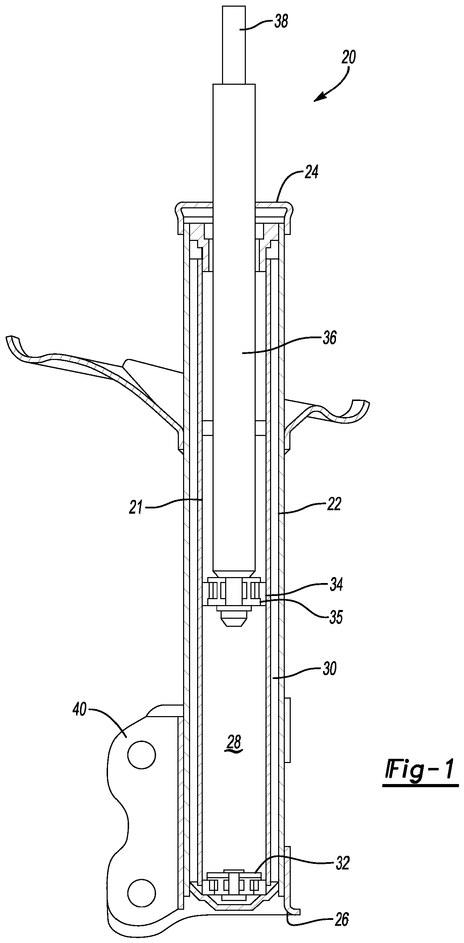

With reference to FIG. 1, a shock absorber 20 is shown of the type used in automotive light vehicles, such as cars, light trucks, etc. The shock absorber 20 includes an outer tube 22 and an inner tube 21 which is coaxially disposed within the outer tube 22. The inner and outer tubes 21 and 22 are secured together at both their upper end 24 and lower end 26. The inner tube 21 thus divides the outer tube 22 into two distinct fluid chambers, namely a cylindrical working chamber 28 formed by the interior of the inner tube 21, and an annular replenishment chamber 30 formed in between the inner and outer tubes 21 and 22. A base valve assembly 32, which will be shortly described in greater detail, controls the fluid flow between the replenishment chamber 30 and the working chamber 28.

A piston 34 having its outer periphery sealed to the inner periphery of the inner tube 21 is reciprocally slidably disposed within the working chamber 28 of the inner tube 21. A piston rod 36 is attached to the piston 34 and this piston rod 36 extends outwardly through an opening in the upper end 24 of the shock absorber 20.

In use, an upper end 38 of the piston rod 36 is attached to the chassis of the vehicle. Conversely, the lower end 26 of the shock absorber 20 is attached to the vehicle suspension system so that the lower end 26 of the shock absorber 20 moves vertically in unison with the suspension system and thus with the wheels for the automotive vehicle. Any conventional mechanism, such as a bracket 40, may be used to attach the lower end 26 of the shock absorber 20 to the suspension system.

The piston 34 also contains through orifices 35 to permit fluid flow between an upper and a lower portion of the working chamber 28. These orifices may be valved and are conventional in construction.

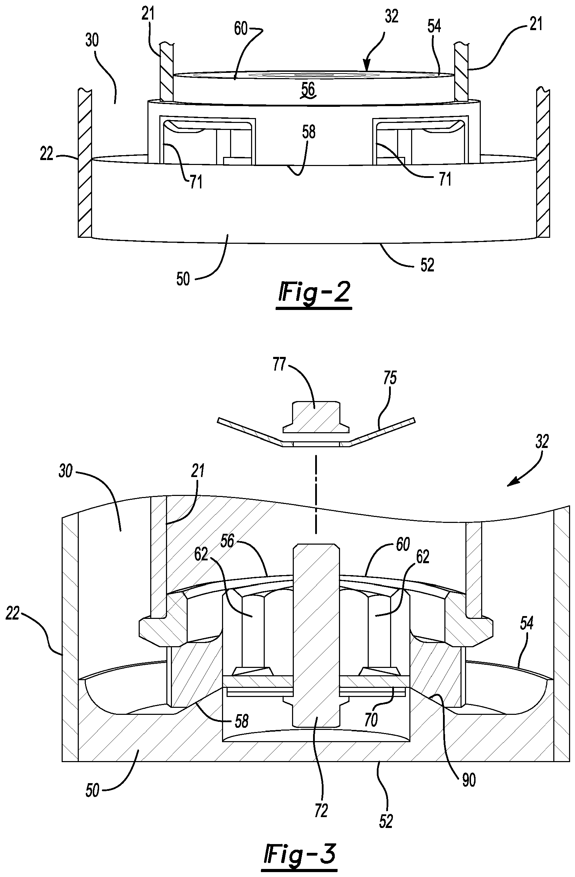

With reference now to FIG. 2, the base valve assembly 32 is there shown in greater detail. The base valve assembly 32 includes a base plate 50 which is generally cylindrical in shape having an outer end 52 and an inner end 54. The base plate 50 is attached to the lower end of the outer tube 22 thus fluidly sealing the lower end of the outer tube 22.

A cylindrical base cage 56 has its outer or lower end 58 supported by the base plate 50. An upper end 60 of the base cage 56 is open to the working chamber 28.

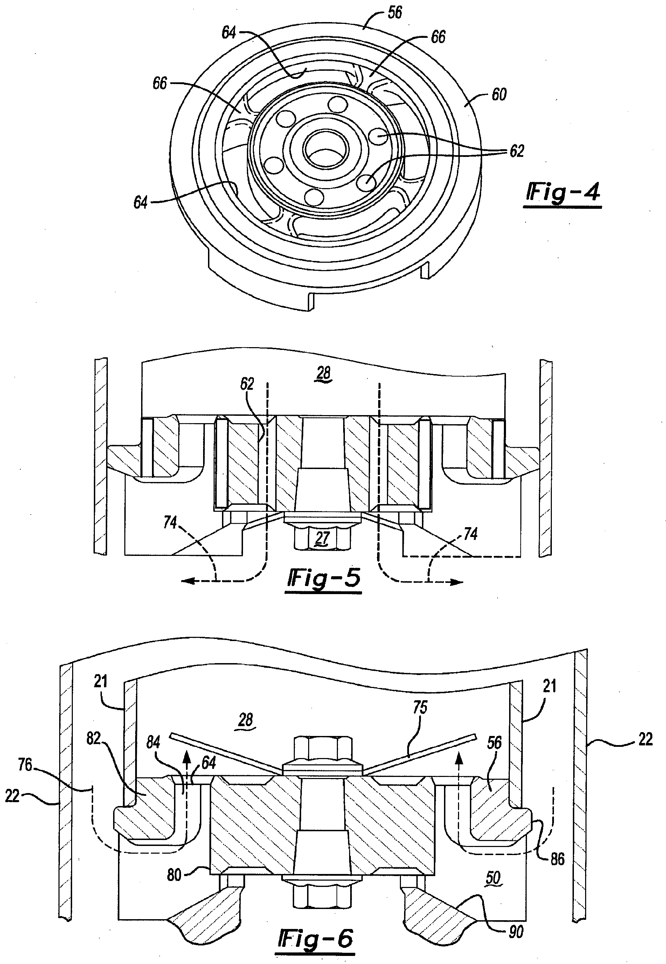

With reference now to FIG. 4, the base cage 56 has a plurality of circumferentially spaced fluid passageways 62 which extend between the axial ends 58 and 60 of the base cage 56. Similarly, a plurality of arcuate slots 64 are also formed axially between the ends 58 and 60 of the base cage 56. These slots6 4 form a second set of axially extending fluid passageways through the base cage 56 and are positioned radially outwardly from the first set of passageways 62.

Still referring to FIG. 4, the ends of adjacent slots 64 are positioned closely adjacent each other so that only very narrow webs 66 on the base cage 56 separate the slots 64 from each other. Consequently, these slots 64 establish free communication through the base cage 56.

With reference to FIG. 3, a first base valve 70 is attached to the base cage 56 so that the base valve 70 overlies the first set of passageways 62 on the outer end 58 of the base cage 56. The base valve 70 is secured in position by a bolt 72. However, in the event of a compression cycle of the shock absorber, i.e. when the pressure within the working chamber 28 increases due to the downward movement of the plunger 34, the increased pressure in the working chamber 28 causes the base valve 70 to open, as shown in FIG. 5, and allow fluid flow from the working chamber 28, through side openings 71 (FIG. 2) in the base cage 56 and to the replenishment chamber 30 as shown by arrows 74.

With reference now to FIGS. 3 and 6, a second base valve 75 is secured by a nut 77 to the base cage 56 so that the valve 75 extends over the slots 64 but has openings aligned with the passageways 62. During an extension event, the pressure within the working chamber 28 is reduced. This, in turn, causes the second base valve 75 to open and permit fluid flow from the replenishment chamber 30 to the main chamber 38 as shown by arrows 76.

In order to reduce flow resistance from the replenishment chamber 30 and to the working chamber 28 during an extension cycle, an inner wall 80 of each slot 64 in the second set of fluid passageways extends downwardly past the opening which forms the slot. In addition, a lower surface 82 of the base cage 56 extending radially outwardly from an outer wall 84 of the slot 74 extends radially outwardly or slopes upwardly from the slot 74. Consequently, the fluid flow of the hydraulic fluid from the replenishment chamber 30 to the working chamber 28 is generally unimpeded and, indeed, the inner wall 80 of the slot 74 directs the flow up through the slots 74.

Still referring to FIG. 6, an outer peripheral edge 86 of the base cage 56 is also rounded in order to facilitate fluid flow from the replenishment chamber 30 and to the working chamber 28 during an extension cycle.

Still referring to FIG. 6, m order to further direct the fluid flow from the replenishment chamber 30 and up through the slots 74 during an extension cycle, a frustoconical surface 90 is formed on the base 50 which is aligned with the slot 64. This frustoconical surface 90 also slopes axially downwardly and radially outwardly from its inner end and to its outer end so that, during an extension cycle, the surface 90 reflects and directs the hydraulic oil towards the slots 64 in the base cage 56.

From the foregoing, it can be seen that the present invention provides a design for a base valve assembly for a shock absorber which reduces flow restrictions during an extension cycle for the shock absorber. By thus reducing the flow restrictions, hysteresis of the shock absorber is improved which increases the overall performance of the shock absorber.

Having described our invention, however, many modifications thereto will become apparent to those skilled in the art to which it pertains without deviation from the invention as defined by the scope of the appended claims.

## Claims

1. A base valve assembly (32) for a shock absorber, the shock absorber having an outer tube (22), an inner tube (21) and a piston reciprocally mounted in an interior of the inner tube (21), the valve assembly configured to regulate fluid flow between an annular outer replenishment chamber (30) between the outer tube (22) and the inner tube (21) and an inner working chamber (28) formed by the interior of the inner tube comprising:
a base plate (50),
a base cage (56) positioned on said base plate (50), said base cage (56) having a first set of fluid passageways which fluidly connect the inner working chamber (28) to the outer replenishment chamber (30) upon a compression stroke of the piston (34), and a second set of fluid passageways which fluidly connect the outer replenishment chamber (30) to the inner working chamber (28) upon an extension stroke of the piston,
a first base valve (70) mounted to said base cage (56) which opens the first set of fluid passageways during said compression stroke of the piston (34), and
a second base valve (75) mounted to said base cage (56) which opens said second set of fluid passageways during the extension stroke of the piston (34),
wherein said second set of fluid passageways comprises a plurality of arcuate, elongated slots formed through said base cage (56) so that the ends of said slots are closely adjacent to each other,
**characterized in that** said base cage (56) has an upper end and a lower end, and
the valve assembly comprising a replenishment fluid passageway formed between said lower end of said base cage (56) and said base plate (50) to fluidly connect said second set of passageways to the outer replenishment chamber (30); and
wherein the second set of fluid passageways each include an outer wall (84) and an inner wall (80) extending downward from the upper end toward the lower end,
wherein the inner wall (80) of the second set of fluid passageways extends downward farther than the outer wall (84), and is positioned to direct fluid flowing past a bottom of the outer wall (84) upward through the second set of fluid passageways,
wherein the base plate (50) comprises a frustoconical deflector wall (90) aligned with the second set of fluid passageways,
wherein the frustoconical deflector wall (90) slopes radially inwardly and upwardly toward a lower end of the inner wall and away from the annular outer replenishment chamber.

2. The base valve assembly as defined in claim 1 wherein said first set of fluid passageways comprises a plurality of circumferentially spaced holes formed through said base cage (56).

3. The base valve assembly as defined in claim 2 wherein said first set of passageways is positioned radially inwardly of said second set of passageways.

4. The base valve assembly as defined in claim 1 wherein said base cage (56) is generally cylindrical in shape having two ends, and wherein said base valve assembly (32) comprises a compression cycle valve attached to one end of said base cage (56) and an extension valve attached to the other end of said base cage (56).

5. The base valve assembly as defined in claim 1 wherein a portion of said outer end of said base cage (56) positioned radially outwardly from said second set of passageways is planar or slopes axially inwardly from an outer end of said second set of passageways and to an outer periphery of said base cage (56).

6. The base valve assembly as defined in claim 5 wherein the radially outermost edge of said outer end of said base cage (56) is rounded.

7. A shock absorber having an outer tube (22), an inner tube (21) and a piston (34) reciprocally mounted in an interior of the inner tube (21) and a base valve assembly of at least one of claims 1 to 6.

## Patentansprüche

1. Basisventilbaugruppe (32) für einen Stoßdämpfer, wobei der Stoßdämpfer ein Außenrohr (22), ein Innenrohr (21) und einen Kolben, der in einem Innenraum des Innenrohrs (21) hin und her beweglich montiert ist, umfasst, wobei die Ventilbaugruppe konfiguriert ist, die Fluidströmung zwischen einer ringförmigen äußeren Auffüllkammer (30) zwischen dem Außenrohr (22) und dem Innenrohr (21) und einer inneren Arbeitskammer (28), die durch den Innenraum des Innenrohrs gebildet ist, zu regulieren, die Folgendes umfasst:
eine Basisplatte (50),
einen Basiskäfig (56), der auf der Basisplatte (50) positioniert ist, wobei der Basiskäfig (56) einen ersten Satz von Fluiddurchgängen, die die innere Arbeitskammer (28) mit der äußeren Auffüllkammer (30) bei einem Verdichtungshub des Kolbens (34) fluidtechnisch verbinden, und einen zweiten Satz von Fluiddurchgängen, die die äußere Auffüllkammer (30) mit der inneren Arbeitskammer (28) bei einem Ausdehnungshub des Kolbens fluidtechnisch verbinden, aufweist,
ein erstes Basisventil (70), das an den Basiskäfig (56) montiert ist und den ersten Satz von Fluiddurchgängen während des Verdichtungshubs des Kolbens (34) öffnet, und
ein zweites Basisventil (75), das an den Basiskäfig (56) montiert ist und den zweiten Satz von Fluiddurchgängen während des Ausdehnungshubs des Kolbens (34) öffnet,
wobei der zweite Satz von Fluiddurchgängen mehrere gebogene, längliche Schlitze umfasst, die durch den Basiskäfig (56) gebildet sind, so dass die Enden der Schlitze eng zueinander benachbart sind,
**dadurch gekennzeichnet, dass** der Basiskäfig (56) ein oberes Ende und ein unteres Ende aufweist, und
die Ventilbaugruppe einen Auffüllfluiddurchgang umfasst, der zwischen dem unteren Ende des Basiskäfigs (56) und der Basisplatte (50) gebildet ist, um den zweiten Satz von Durchgängen mit der äußeren Auffüllkammer (30) fluidtechnisch zu verbinden, und
wobei der zweite Satz von Fluiddurchgängen jeweils eine Außenwand (84) und eine Innenwand (80) umfasst, die sich von dem oberen Ende nach unten zu dem unteren Ende erstrecken,
wobei sich die Innenwand (80) des zweiten Satzes von Fluiddurchgängen weiter nach unten erstreckt als die Außenwand (84) und positioniert ist, um Fluid, das an einer Unterseite der Außenwand (84) vorbeiströmt, durch den zweiten Satz von Fluiddurchgängen nach oben zu richten,
wobei die Basisplatte (50) eine kegelstumpfförmige Ablenkwand (90) umfasst, die auf den zweiten Satz von Fluiddurchgängen ausgerichtet ist,
wobei die kegelstumpfförmige Ablenkwand (90) radial nach innen und nach oben zu einem unteren Ende der Innenwand und weg von der ringförmigen äußeren Auffüllkammer abfällt.

2. Basisventilbaugruppe nach Anspruch 1, wobei der erste Satz von Fluiddurchgängen mehrere in Umfangsrichtung beabstandete Löcher umfasst, die durch den Basiskäfig (56) gebildet sind.

3. Basisventilbaugruppe nach Anspruch 2, wobei der erste Satz von Fluiddurchgängen radial innerhalb des zweiten Satzes von Durchgängen positioniert ist.

4. Basisventilbaugruppe nach Anspruch 1, wobei der Basiskäfig (56) im Allgemeinen eine zylindrische Form mit zwei Enden aufweist und die Basisventilbaugruppe (32) ein Verdichtungszyklusventil, das an einem Ende des Basiskäfigs (56) angebracht ist, und ein Ausdehnungsventil, das an dem anderen Ende des Basiskäfigs (56) angebracht ist, umfasst.

5. Basisventilbaugruppe nach Anspruch 1, wobei ein Abschnitt des äußeren Endes des Basiskäfigs (56), der radial außerhalb des zweiten Satzes von Durchgängen positioniert ist, eben ist oder axial innerhalb eines äußeren Endes des zweiten Satzes von Durchgängen und eines äußeren Randes des Basiskäfigs (56) abfällt.

6. Basisventilbaugruppe nach Anspruch 5, wobei die radial äußerste Kante des äußeren Endes des Basiskäfigs (56) abgerundet ist.

7. Stoßdämpfer, der ein Außenrohr (22), ein Innenrohr (21) und einen Kolben (34), der in einem Innenraum des Innenrohrs (21) hin und her beweglich montiert ist, und eine Basisventilbaugruppe nach mindestens einem der Ansprüche 1 bis 6 aufweist.

## Revendications

1. Assemblage de valve de base (32) pour un amortisseur, l'amortisseur ayant un tube extérieur (22), un tube intérieur (21) et un piston monté en va-et-vient à l'intérieur du tube intérieur (21), l'assemblage de valve étant configuré pour réguler un écoulement de fluide entre une chambre de réapprovisionnement extérieure annulaire (30) entre le tube extérieur (22) et le tube intérieur (21) et une chambre de travail intérieure (28) formée par l'intérieur du tube intérieur, comprenant :
une plaque de base (50),
une cage de base (56) positionnée sur ladite plaque de base (50), ladite cage de base (56) ayant un premier jeu de passages de fluide qui connecte de manière fluidique la chambre de travail intérieure (28) à la chambre de réapprovisionnement extérieure (30) lors d'une course de compression du piston (34), et un second jeu de passages de fluide qui connecte de manière fluidique la chambre de réapprovisionnement extérieure (30) à la chambre de travail intérieure (28) lors d'une course d'extension du piston,
une première valve de base (70) montée sur ladite cage de base (56) qui ouvre le premier jeu de passages de fluide pendant ladite course de compression du piston (34), et
une seconde valve de base (75) montée sur ladite cage de base (56) qui ouvre ledit second jeu de passages de fluide pendant la course d'extension du piston (34),
dans lequel ledit second jeu de passages de fluide comprend une pluralité de fentes allongées arquées formées à travers ladite cage de base (56) de sorte que les extrémités desdites fentes sont adjacentes les unes aux autres de manière rapprochée,
**caractérisé en ce que** ladite cage de base (56) a une extrémité supérieure et une extrémité inférieure, et
l'assemblage de valve comprend un passage de fluide de réapprovisionnement formé entre ladite extrémité inférieure de ladite cage de base (56) et ladite plaque de base (50) pour connecter de manière fluidique ledit second jeu de passages à la chambre de réapprovisionnement extérieure (30) ; et
dans lequel le second jeu de passages de fluide inclut chaque fois une paroi extérieure (84) et une paroi intérieure (80) s'étendant vers le bas depuis l'extrémité supérieure en direction de l'extrémité inférieure,
dans lequel la paroi intérieure (80) du second jeu de passages de fluide s'étend vers le bas plus loin que la paroi extérieure (84), et est positionnée pour diriger le fluide s'écoulant le long d'un fond de la paroi extérieure (84) vers le haut à travers le second jeu de passages de fluide,
dans lequel la plaque de base (50) comprend une paroi déflectrice tronconique (90) alignée avec le second jeu de passages de fluide,
dans lequel la paroi déflectrice tronconique (90) est inclinée radialement vers l'intérieur et vers le haut en direction d'une extrémité inférieure de la paroi intérieure et en éloignement de la chambre de réapprovisionnement extérieure annulaire.

2. Assemblage de valve de base selon la revendication 1, dans lequel ledit premier jeu de passages de fluide comprend une pluralité de trous circonférentiellement distants formés à travers ladite cage de base (56).

3. Assemblage de valve de base selon la revendication 2, dans lequel le premier jeu de passages est positionné radialement à l'intérieur dudit second jeu de passages.

4. Assemblage de valve de base selon la revendication 1, dans lequel ladite cage de base (56) est généralement de forme cylindrique avec deux extrémités, et dans lequel ledit assemblage de valve de base (32) comprend une valve de cycle de compression attachée à une extrémité de ladite cage de base (56) et une valve d'extension attachée à l'autre extrémité de ladite cage de base (56).

5. Assemblage de valve de base selon la revendication 1, dans lequel une portion de ladite extrémité extérieure de ladite cage de base (56) positionnée radialement à l'extérieur dudit second jeu de passages est plane ou est inclinée axialement vers l'intérieur depuis une extrémité extérieure dudit second jeu de passages jusqu'à une périphérie extérieur de ladite cage de base (56).

6. Assemblage de valve de base selon la revendication 5, dans lequel le bord radialement le plus extérieur de ladite extrémité extérieure de ladite cage de base (56) est arrondi.

7. Amortisseur ayant un tube extérieur (22), un tube intérieur (21) et un piston (34) monté en va-et-vient à l'intérieur du tube intérieur (21) et un assemblage de valve de base selon l'une au moins des revendications 1 à 6.
